Europäisches Patentamt

European Patent Office

Office européen des brevets

(11) Publication number: **0 283 748**
**A1**

## EUROPEAN PATENT APPLICATION

(21) Application number: 88102719.7

(22) Date of filing: 24.02.88

(51) Int. Cl.4: **G02B 6/22**

(30) Priority: 25.02.87 JP 41718/87

(43) Date of publication of application:
28.09.88 Bulletin 88/39

(84) Designated Contracting States:
DE FR GB IT

(71) Applicant: SUMITOMO ELECTRIC INDUSTRIES
LIMITED
No. 15, Kitahama 5-chome Higashi-ku
Osaka-shi Osaka 541(JP)

(72) Inventor: Shigematsu, Masayuki Yokohama
Works of Sumitomo
Electric Industries, Ltd. 1, Taya-cho Sakae-ku
Yokohama-shi Kanagawa-ken(JP)
Inventor: Tanaka, Shigeru Yokohama Works
of Sumitomo
Electric Industries, Ltd. 1, Taya-cho Sakae-ku
Yokohama-shi Kanagawa-ken(JP)

(74) Representative: Hansen, Bernd, Dr.rer.nat. et
al
Hoffmann, Eitle & Partner Patentanwälte
Arabellastrasse 4
D-8000 München 81(DE)

(54) Optical fiber.

(57) An optical fiber comprising a core (11) at least a center portion of which is made of glass essentially consisting of silica, a first cladding (12) which is provided around the core (11) and has a refractive index smaller than that of the core (11) and a second cladding (13) which is provided around the first cladding (12) and has a refractive index larger than that of the first cladding (12) and lower than that of the core (11), which has improved environmental resistance and small wavelength dispersion in a wide range of wavelength.

*Fig . 3A*

## OPTICAL FIBER

### BACKGROUND OF THE INVENTION

#### Field of the Invention

The present invention relates to an optical fiber with environmental resistance. More particularly, it relates to an optical fiber having small chromatic dispersion in a wide range of wavelength.

#### Description of the Prior Art

To achieve long haul and high bit rate optical communication, an optical fiber is required to have low chromatic dispersion and small transmission attenuation of light. If the optical fiber has a chromatic dispersion larger than a certain limit, a linewidth of a light source induced by modulation (chirping) cannot be ignored to achieve long haul and high bit rate communication. If transmission attenuation of light is large, a number of repeaters should be installed in an optical cable line, which decreases value of the optical fiber in long haul communication.

Generally, it is recognized that light in a 1.3 $\mu m$ wavelength band and particularly in a 1.55 $\mu m$ wavelength band suffers from less attenuation in an $SiO_2$ glass based optical fiber. Therefore, many studies are directed to the development of an optical fiber which has low dispersion in the 1.55 $\mu m$ wavelength band.

One of the conventional techniques for achieving low chromatic dispersion in the 1.55 $\mu m$ wavelength band is a so-called dispersion shifted optical fiber, which can shift zero dispersion wavelength from the 1.3 $\mu m$ wavelength band to the 1.55 $\mu m$ wavelength band (cf. B. J. Ainslie et al., Electronics Letters, Vol. 18, No. 19, 843-845 (1982)). By the dispersion shifted optical fiber, the wavelength dispersion can be significantly suppressed in the 1.55 $\mu m$ wavelength band in which the transmission attenuation of light is small. Therefore, high bit rate communication in a long distance is achieved.

However, according to the dispersion shifted optical fiber, the dispersion can be decreased in a narrow wavelength range. Therefore, the dispersion shifted optical fiber is not suitable for communication in a wider wavelength range.

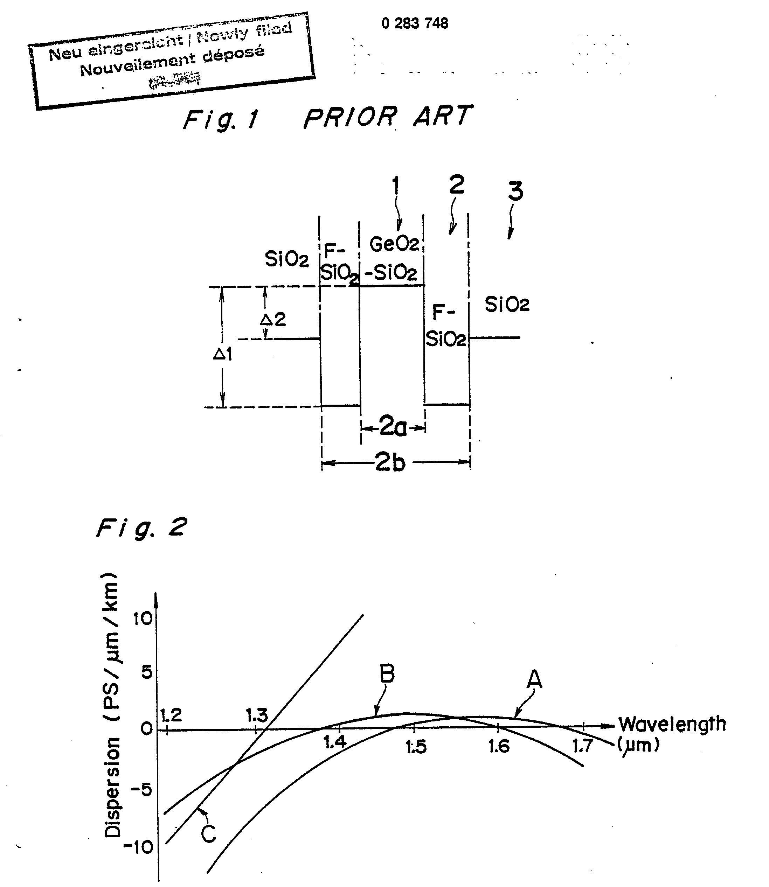

Another technique for achieving low chromatic dispersion is described in Leonard G. Cohen et al, Optics Letters, Vol. 7, No. 4 (1982) 183-185 and Kawakami et al, IEEE Journal of Quantum Electronics (JQE), Vol. 10, No. 12 (1974) 879-887. These papers propose an optical fiber having a refractive index profile as shown in Fig. 1. This optical fiber comprises a core 1 made of $GeO_2$-containing $SiO_2$ - (silica), a first cladding 2 made of fluorine-added $SiO_2$ around the core 1 and a second cladding 3 made of $SiO_2$ around the first cladding 2. The relationship of refractive indices $n_1$, $n_2$ and $n_3$ of the core 1, the first cladding 2 and the second cladding 3, respectively is

$$n_1 > n_3 > n_2.$$

When specific refractive index difference $\Delta_1$ between the core 1 and the first cladding 2 is made large, the optical fiber has low dispersion in a wide wavelength range from 1.3 to 1.55 $\mu m$ as shown by the curves A and B in Fig. 2. By adjusting a radius (a) of the core, a radius (b) of the first cladding, $\Delta_1$ and $\Delta_2$ (specific refractive index difference between the core 1 and the second cladding 3), either of characteristics corresponding to the curves A and B is realized. The characteristic corresponding to the curve B is effective in a wavelength range from 1.3 to 1.55 $\mu m$. The line C represents dispersion characteristics of a conventional step index optical fiber.

If such optical fiber having a double cladding structure as shown in Fig. 1 is used in a severe environment such as in a hydrogen atmosphere or with gamma-ray radiation, its light transmission characteristics are deteriorated.

First, when the optical fiber comprising the core made of $GeO_2$-containing $SiO_2$ is placed in the hydrogen atmosphere, hydrogen diffuses into the core and forms hydroxy groups therein. If the hydroxy groups are formed by a reaction between hydrogen and .$GeO_2$, transmission attenuation of light increases not only in a wavelength range near 1.4 $\mu m$ but also in a wavelength range longer than 1.5 $\mu m$ because of tailing of IR absorption by the hydroxy groups in a 2.7 $\mu m$ wavelength band. The hydroxy groups are formed by an irreversible reaction between hydrogen and $GeO_2$ and never be removed. The number of hydroxy groups to be formed depends on a content of $GeO_2$ in the core (cf. Electrical Communications Laboratories Technical Journal, Japan, Vol. 35, No. 6 (1986) 625-631).

Second, when the optical fiber comprising the core made of $GeO_2$-containing $SiO_2$ is irradiated, light absorption centers which increase transmission attenuation of light are formed in the core glass by radiation energy.

Because of poor environmental resistance as described above, the optical fiber which comprises the core made of $GeO_2$-containing $SiO_2$ is not suitable to be used under severe conditions and has low long term reliability.

## SUMMARY OF THE INVENTION

An object of the present invention is to provide an $SiO_2$ based glass optical fiber which has low attenuation of light transmission and small chromatic dispersion in a wide wavelength range and improved environmental resistance and reliability.

This and other objects are achieved by an optical fiber comprising a core at least a center portion of which is made of glass essentially consisting of silica, a first cladding which is provided around the core and has a refrac tive index smaller than that of the core and a second cladding which is provided around the first cladding and has a refractive index larger than that of the first cladding and lower than that of the core.

Since the core of the optical fiber according to the present invention does not contain a substantial amount of $GeO_2$, the substantial number of the hydroxy groups are not formed by the reaction of hydrogen with $GeO_2$ or any light absorption center is not generated by irradiation.

## BRIEF DESCRIPTION OF THE DRAWINGS

Fig. 1 shows a refractive index profile of a conventional optical fiber a core of which is made of $GeO_2$-containing $SiO_2$.

Fig. 2 shows dispersion of wavelength for three kinds of optical fibers,

Figs. 3A and 3B show refractive index profiles of two embodiments of optical fibers according to the present invention,

Figs. 4 and 5 are graphs showing relationships between transmission attenuation of light and wavelength,

Fig. 6 is a graph showing increase of transmission attenuation of light by irradiation of optical fibers produced in Example and Comparative Example.

## DETAILED DESCRIPTION OF THE DRAWINGS

The present invention will be explained by making reference to the accompanying drawings.

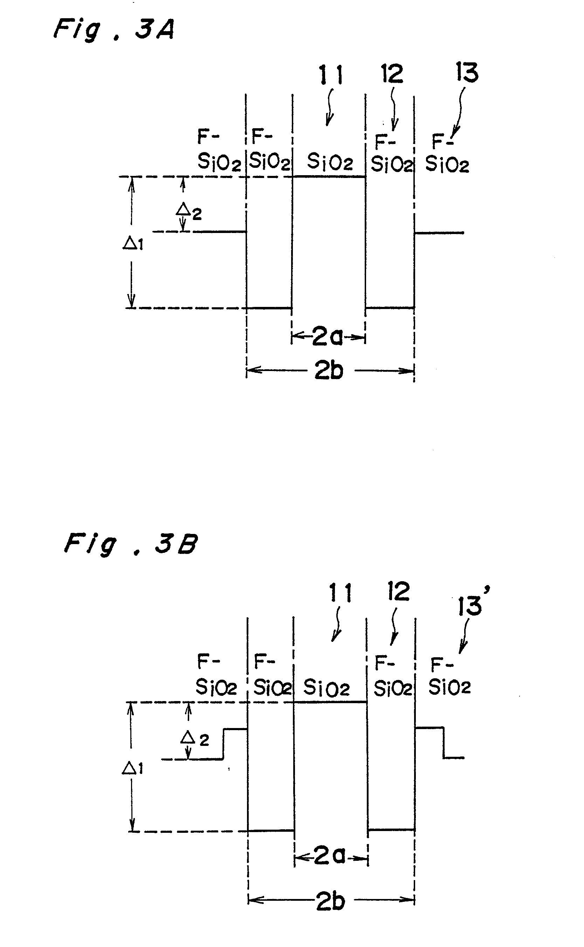

Figs. 3A and 3B show refractive index profiles of two preferred embodiments of the optical fibers according to the present invention.

The optical fiber shown in Fig. 3A comprises a core 11 made of pure silica ($SiO_2$), a first cladding

12 made of a fluorine-added silica and a second cladding 13 made of a silica to which fluorine is added in an amount smaller than that added to the first cladding. Since no part of the optical fiber contains $GeO_2$, no hydroxy group is formed by the reaction of hydrogen with $GeO_2$ when the optical fiber is used in the hydrogen atmosphere, and in turn no IR absorption in the 1.4 and 2.7 μm wavelength bands. As the result, increase of transmission attenuation of light in the 1.55 and 1.3 μm wavelength bands is prevented. Further, when the optical fiber of the present invention is irradiated, no absorption center is formed, whereby increase of transmission attenuation of light is suppressed.

Fig. 3B shows a refractive index profile of an optical fiber which is a modification of the optical fiber of Fig. 3A. The optical fiber of Fig. 3B comprises the core 11 and the cladding 12 which are made of the same glass materials as used for the core and the first cladding of the optical fiber of Fig. 3A, but the second cladding 13' has a different refractive index profile from that of the second cladding 13 of Fig. 3A. Namely, the inner part of the second cladding 13' has a refractive index higher than that of the outer part thereof as shown in Fig. 3B. Thereby, on one hand, environmental resistance of the optical fiber is improved and on the other hand, bending loss of the optical fiber is decreased.

The both optical fibers of Figs. 3A and 3B satisfy the refractive index relationship of

$$n_1 > n_3 > n_2$$

wherein $n_1$, $n_2$ and $n_3$ are refractive indices of the core 11, the first cladding 12 and the second cladding 13,13', respectively.

As in the conventional optical fiber described above, by adjusting the radius (a) of the core, a radius (b) of the first cladding, $\Delta_1$ and $\Delta_2$, either of characteristics corresponding to the curves A and B of Fig. 2 is realized. For example, to achieve the characteristic of the curve A, namely small dispersion in the 1.55 μm, the following parameters are selected:

$\Delta_1$: 0.9 to 1.2 %, preferably 1.0 to 1.1 %

$\Delta_1$-$\Delta_2$: 0.2 to 0.6 %, preferably 0.3 to 0.4 %

$R_a$ (a/b): 0.3 to 0.7, preferably 0.5 to 0.6

To achieve the characteristic of the curve B, namely small dispersion in the 1.3 and 1.55 μm wavelength bands, the following parameters are selected:

$\Delta_1$: 0.9 - 1.2 %, preferably 1.0 to 1.1 %

$\Delta_1$ -$\Delta_2$: 0.2 to 0.6 %, preferably 0.4 to 0.5 %

$R_a$ (a/b): 0.3 to 0.7, preferably 0.4 to 0.5.

The optical fiber of the present invention may be produced by inserting a core in a hollow cylindrical glass having the glass composition for the first cladding, then inserting the integrated core and the first cladding in another hollow cylindrical glass having the glass composition for the second cladding and then integrating them together followed by drawing to produce the optical fiber.

## Example and Comparative Example

To achieve the characteristic of the curve A, an optical fiber comprising the core made of pure silica and the first and second claddings made of silica added by fluorine in different amounts was produced by adjusting the radius (a) to 2.4 $\mu$m, the radius (b) to 6.1 $\mu$m, $\Delta_1$ to 0.97 % and $\Delta_2$ to 0.31 %.

For comparison, an optical fiber having the refractive index profile of Fig. 1 and comprising the core made of $GeO_2$-containing silica, the first cladding made of fluorine added silica and the second cladding made of pure silica was produced by adjusting the radius (a) to 2.5 $\mu$m, the radium (b) to 5.1 $\mu$m, $\Delta_1$ to 1.09 % and $\Delta_2$ to 0.38 %.

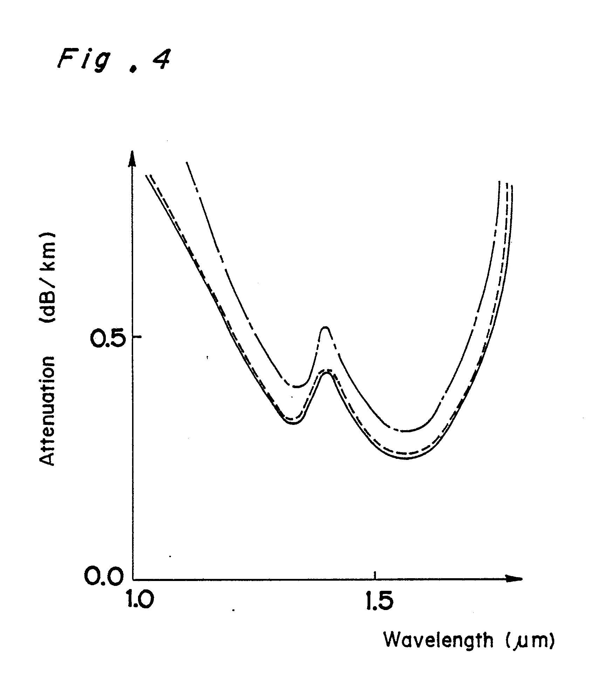

The produced optical fibers originally had attenuation characteristics shown in Fig. 4 by the solid curve (Example) and the point and dashed curve (Comparative Example). The optical fiber of the present invention had attenuation of 0.247 dB/km at the wavelength of 1.55 $\mu$m, while the comparative optical fiber had attenuation of 0.310 dB/km at the wavelength of 1.55 $\mu$m. The less attenuation of the optical fiber of the present invention is due to the core made of pure silica, while the comparative optical fiber had large attenuation due to Rayleigh scattering loss caused by $GeO_2$ contained in the core glass.

The hydrogen resistance of the both optical fibers was examined as follows:

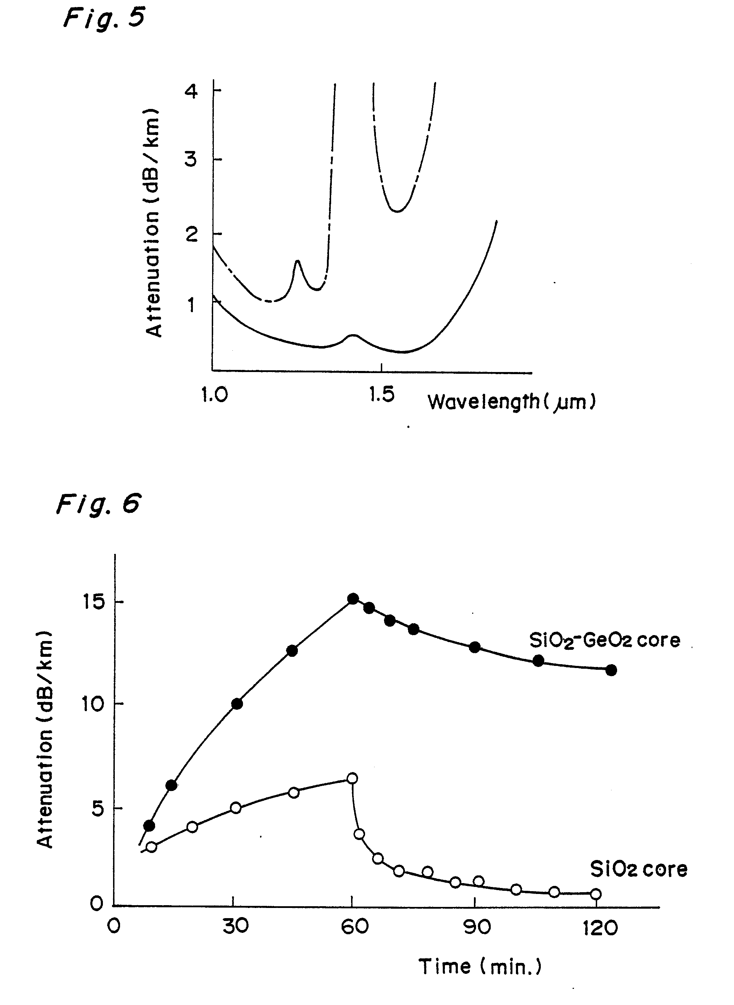

Five hundred meters of the optical fiber of the present invention with silicone resin coating was bundled and kept in a hydrogen atmosphere at 200°C under 1 atmosphere for 100 hours. Five hundred meters of the comparative optical fiber was bundled and kept in a hydrogen atmosphere at 200°C under 1 atmosphere for 20 hours. Thereafter, the transmission attenuation of light was measured. The results are shown in Fig. 5 and also Fig. 4 (only for the optical fiber of the present invention). The solid curve in Fig. 5 and the broken curve in Fig. 4 represent the attenuation of the optical fiber of the present invention after hydrogen treatment, and the point and dashed curve in Fig. 5 represents the attenuation of the comparative optical fiber after hydrogen treatment. As understood from these results, the optical fiber of the present invention is not deteriorated by hydrogen treatment, while the comparative optical fiber is greatly deteriorated by hydrogen treatment.

The radiation resistance of the both optical fibers was examined as follows:

Each optical fiber was irradiated by gamma-ray from $^{60}$Co at an irradiation rate of $10_5$ R/hr for 1 hour and then increase of attenuation at the wavelength of 1.3 $\mu$m was measured. The results are plotted in Fig. 6. From the results, it is understood that increase of attenuation of the optical fiber of the present invention was about one third of that of the comparative optical fiber. In addition, after termination of irradiation, the characteristic of the optical fiber of the present invention is recovered more quickly than the comparative optical fiber, and attenuation of the former after one hour from termination of irradiation was about one tenth of that of the comparative optical fiber.

The present invention is not limited to the above described embodiment but can be modified in many ways.

For example, silica for the core of the optical fiber may contain $GeO_2$ in such very small amount that the environmental resistance of the optical fiber is not adversely affected, for example, less than 0.2 % by weight. The refractive index of the core may decrease towards the first cladding. Further, the refractive index may smoothly change at an interface between the core and the first cladding or between the first cladding and the second cladding.

## Claims

1. An optical fiber comprising a core at least a center portion of which is made of glass essentially consisting of silica, a first cladding which is provided around the core and has a refractive index smaller than that of the core and a second cladding which is provided around the first cladding and has a refractive index larger than that of the first cladding and lower than that of the core.

2. The optical fiber according to claim 1, wherein an inner part of the second cladding has a refractive index higher than that of an outer part of the second cladding.

3. The optical fiber according to claim 1, wherein

$\Delta_1$ = 0.9 to 1.2 %,

$\Delta_1 - \Delta_2$ = 0.2 to 0.6 % and

Ratio of radius of the core to that of the first cladding = 0.3 to 0.7

wherein $\Delta_1$ and $\Delta_2$ are refractive index differences between the core and the first cladding and between the core and the second cladding, respectively.

0 283 748

# Fig. 1    PRIOR ART

SiO₂ | F-SiO₂ | GeO₂-SiO₂ | F-SiO₂ | SiO₂

1  2  3

Δ2

Δ1

←2a→

←─ 2b ─→

# Fig. 2

## Fig . 3A

## Fig . 3B

# Fig . 4

0 283 748

## Fig. 5

Attenuation (dB / km) vs Wavelength (μm)

## Fig. 6

Attenuation (dB/km) vs Time (min.)

$SiO_2$-$GeO_2$ core

$SiO_2$ core

| DOCUMENTS CONSIDERED TO BE RELEVANT | | EP 88102719.7 |

EP 88102719.7

| Category | Citation of document with indication, where appropriate, of relevant passages | Relevant to claim | CLASSIFICATION OF THE APPLICATION (Int. Cl.4) |
|---|---|---|---|
| X | US - A - 4 435 040 (COHEN et al.) <br> * Column 1, line 17 - column 3, line 51; column 4, line 18 - column 5, line 19; column 5, line 51 - column 7, line 19; fig. 1-7,9 * | 1,3 | G 02 B 6/22 |
| X | EP - A1 - 0 131 634 (ANT) <br> * Page 2, line 14 - page 4, line 17; page 5, line 21 - page 7, line 16 * | 1,2 | |
| X <br> A | US - A - 4 447 125 (LAZAY et al.) <br> * Column 2, line 53 - column 6, line 30; example * | 1 <br> 3 | |
| X | DE - A1 - 3 500 672 (PHILIPS) <br> * Page 9, line 6 - page 16, line 19 * | 1 | TECHNICAL FIELDS SEARCHED (Int. Cl.4) <br><br> G 02 B |
| A | US - A - 4 447 127 (COHEN et al.) <br> * Totality * | 1,3 | |
| A | EP - A2 - 0 164 681 (POLAROID CORP.) <br> * Abstract; page 5, line 21 - page 6, line 20; page 8, lines 5-25 * | 1 | |

----

The present search report has been drawn up for all claims

| Place of search | Date of completion of the search | Examiner |
|---|---|---|
| VIENNA | 06-06-1988 | GRONAU |